(19) **Europäisches Patentamt / European Patent Office / Office européen des brevets**

(11) **EP 2 480 026 B1**

(12) # EUROPEAN PATENT SPECIFICATION

(45) Date of publication and mention
of the grant of the patent:
**09.01.2013 Bulletin 2013/02**

(51) Int Cl.:
*H04W 40/22* (2009.01)

(21) Application number: **11290021.2**

(22) Date of filing: **17.01.2011**

(54) **Coordinated transmissions in communication networks**

Koordinierte Übertragungen in Kommunikationsnetzwerken

Transmissions coordonnées dans des réseaux de communication

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**25.07.2012 Bulletin 2012/30**

(73) Proprietor: **Alcatel Lucent**
**75007 Paris (FR)**

(72) Inventor: **Valentin, Stefan**
**70378 Stuttgart (DE)**

(74) Representative: **Wetzel, Emmanuelle et al**
**Alcatel Lucent**
**Intellectual Property & Standards**
**70430 Stuttgart (DE)**

(56) References cited:
WO-A2-2006/099099      GB-A- 2 411 549
US-A1- 2008 002 608      US-B1- 7 542 478

- SHAN CHU ET AL: "Adaptive exploitation of cooperative relay for high performance communications in MIMO ad hoc networks", MOBILE ADHOC AND SENSOR SYSTEMS (MASS), 2010 IEEE 7TH INTERNATIONAL CONFERENCE ON, IEEE, PISCATAWAY, NJ, USA, 8 November 2010 (2010-11-08), pages 21-30, XP031832217, ISBN: 978-1-4244-7488-2
- YIFEI WEI ET AL: "Distributed Optimal Relay Selection for QoS Provisioning in Wireless Multi-Hop Cooperative Networks", GLOBAL TELECOMMUNICATIONS CONFERENCE, 2009. GLOBECOM 2009. IEEE, IEEE, PISCATAWAY, NJ, USA, 30 November 2009 (2009-11-30), pages 1-6, XP031646095, ISBN: 978-1-4244-4148-8

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

<u>Field of the Invention</u>

The invention relates to the field of telecommunications, and, more specifically, to methods and devices for coordinated transmissions in communication networks.

<u>Background</u>

This section introduces aspects that may be helpful in facilitating a better understanding of the invention. Accordingly, the statements of this section are to be read in this light and are not to be understood as admissions about what is in the prior art or what is not in the prior art.

Transmitting video or voice streams under strict delay and quality of service (QoS) constraints is still a major-problem in wireless communications. In this field, cooperative communication techniques such as Cooperative Multipoint (COMP) or cooperative relaying can provide tremendous improvements by introducing spatial diversity and multiplexing gains.

These cooperative schemes employ either dedicated relays or require base stations or user nodes I user equipment to serve as a relay (also referred to as partner) for a limited time. If these relays are not defined by fixed deployment, a cooperative technique has to find the relay node to cooperate with during network operation. Such allocation of relays to nodes is called *pairing* and is the subject of,this application.

Typical pairing schemes employ either channel state information to find the relays that maximize the Signal-to-Noise-Ratio (SNR) of the cooperative transmission [1], use location information to select a partner [2], or combine both types of information [3,4]. An overview of these schemes is provided in [5, Chapter 8].

However, none of these schemes can prevent collisions of high priority packets among the cooperating nodes. More in general, so far, no pairing scheme actively decreases the variance of the rate and latency requests. To the best knowledge of the inventor, so far, no pairing scheme solves the above problems.

The preamble of claim 1 is known from the article "Adaptive exploitation of cooperative relay for high performance communications in MIMO ad hoc networks" by Shan Chu et al., Mobile Adhoc and Sensor Systems (MASS), 2010 IEEE 7th International Conference, 8 November 2010, pp. 21-30.

US 7,542,478 B1 discloses a method for avoiding bottleneck points in multi-hop wireless ad-hoc networks by using overheard RTS/CTS information and by performing rate limiting.

US 2008/0002608 A1 discloses a wireless relay network using QoS-related messages which are used for admission control and/or scheduling of a flow.

**Summary**

The present invention is directed to addressing the effects of one or more of the problems set forth above. The following presents a simplified summary of the invention in order to provide a basic understanding of some aspects of the invention. This summary is not an exhaustive overview of the invention. It is not intended to identify key or critical elements of the invention or to delineate the scope of the invention. Its sole purpose is to present some concepts in a simplified form as a prelude to the more detailed description that is discussed later.

One aspect of the invention relates to a method for selecting at least one partner station from a number of possible partner stations of a transmit station for coordinated transmission of a least two packets, the method comprising: determining a priority of a packet to be transmitted by the transmit station and priorities of packets to be transmitted by the possible partner stations, and selecting the at least one partner station based on a comparison of the priorities of the packets, wherein each possible partner station receives the packet from the transmit station together with a request for coordinated transmission, determines the priority of the received packet and calculates a response time (also called a backoff time) for sending a response to the transmit station based on a priority difference between the received packet and the packet which is to be transmitted by the possible partner station, wherein the response time decreases with increasing priority difference.

In this case, typically a decentralized (uplink) approach is adopted in which a node searches assistance for cooperative transmissions by sending a request to possible partners (i.e. to other network nodes which may serve as a relay station). By determining response times based on priority differences between the received packet and the packet which is to be transmitted by the possible partner station, the response times may serve as an ordering of possible partner stations according to their usefulness for coordinated transmissions. For instance, those of the partner stations which are most suitable for the paring may send their responses before those of the partner stations which are less suitable for the pairing.

Throughout this application, a pairing strategy for media traffic (such as voice or video) with multiple traffic layers is proposed. Each layer has different QoS demands on the transmission that can be expressed by a priority. We assume Variable Bitrate (VBR) media streaming where the priority varies over time and a symmetric traffic scenario where the assisted transmit station as well as the relay station / node transmits media packets - that is, the relay node transmits a traffic flow for its own packets, on behalf of a node other than the transmit station, or a mixture of both. The term "partner" or "partner station" as used herein refers to an entity (network node) which is used as a relay station for a limited time. Moreover, one skilled in the art will appreciate that the term "packet" used herein is equivalent to e.g. a "codeword" or a "protocol data unit (PDU)".

In contrast to the method outlined above, common pairing schemes ignore QoS priorities and thus suffer by the following problems with symmetric traffic:

1. Collision of high priorities: A partner with a high-priority packet is allocated to a node with high-priority. This can lead to rate or delay requests than cannot be fulfilled by the wireless channel.
2. Inefficient usage: Only nodes with low-priority packets are paired. The resulting rate and delay demands are too low to efficiently use the granted channel resources.
3. Highly varying resource demands: The above problems (1) and (2) can substantially increase the variance (i.e., burstiness) of the requested rate and latency. In particular, priority collisions can lead to more frequent and higher peaks than in the non-cooperative case. This increase in peak rate makes transmission errors and, thus, QoS degradation more likely compared to non-cooperative transmission.

Thus, the basic idea of this invention is to incorporate QoS priorities into the pairing strategy. This allows to select a partner whose packet has a maximum priority difference to the packet to be transmitted by the transmit station. In other words, the relay nodes for coordinated transmissions can be chosen such that a priority difference over all cooperating nodes is minimized. The pairing may be implemented by a centralized pairing scheme to allocate relays to a single base station for the downlink or by a decentralized pairing protocol to allocate relays to user nodes for the uplink, as will be outlined further below. It will be understood that albeit in the following, the selection of the appropriate (pairing) partner(s) is based on a maximum priority difference, other criteria which are based on the priorities of the packets may be defined for the selection of the appropriate partner for the coordinated transmissions.

Both the centralized and the decentralized pairing scheme are based on QoS priorities that reflect the required rate and/or latency for each node and packet.

The number of cooperating nodes can vary between n=0...J, where J designates the number of possible pairing partners, i.e. the cooperation includes no cooperation and cooperation with a single partner as special cases.

When a traffic stream comprises multiple priorities, the proposed traffic-aware pairing policy provides the following benefits:

- Avoid peaks in the requested priority and thus "smoothes" the requested rate or requested latency over time
- Avoid collisions if both nodes and relays have a high priority packet
- Assure efficient channel usage by pairing low priority nodes to high priority relays (or vice versa)

In one variant, the selection of the partner is further based on a comparison of a requested rate of the receiving station and of at least one requested rate of the at least one possible partner to a maximum available rate. With this rate constraint, in the downlink, the transmit station (e.g. a base station) may choose those partners which maximize the difference in frame priority while assuring that the resulting requested rate is not higher than the achievable rate given by the channel. In a similar way, in the uplink, a network node to be used as a relay may check if the rate constraint is satisfied, and may only signal to the transmit station that it is available for coordinated transmissions if the rate constraint is fulfilled.

In an improvement, at least one possible partner does not transmit a response to the transmit station in case it receives a response of at least one other possible partner. If the response time decreases with increasing priority difference, a possible partner may remain silent as soon as it overhears an answer of another possible partner, as this partner is more suitable for the pairing. In this way, control overhead which has to be transmitted among the nodes can be reduced.

It will be understood that if cooperative transmissions between three or more partners are desired, more than one partner may answer the request for cooperative transmission. In this case, each possible partner remains silent as soon as it overhears a number of responses of other possible partners corresponding to the desired number of cooperation partners. In this way, the control overhead may still be reduced.

In a further variant, the (selected) partner transmits its response to the transmit station at the response time, the response including the packet of the (selected) partner which is to be used for the coordinated transmission. In this way, the transmit station is provided with the packet of the partner and both stations (transmit station and selected partner) may transmit both packets concurrently during the time interval scheduled for the coordinated transmission.

In yet another variant, any possible partner ignores the request for coordinated transmission if the maximum available rate is exceeded. Typically, each possible partner tests for the rate constraint, i.e. compares the requested rate of its own packet and the requested rate of the received packet to a maximum available rate. Only if the maximum available rate is not exceeded, the possible partner calculates the response time for transmitting a response to the transmit station. In case that the transmit station does not receive a response from all of its possible partners (e.g. when the rate test is negative for all possible partners), no coordinated transmissions may take place for the packet which is currently at the head of the transmission queue of the transmit station.

Another aspect of the invention relates to a transmit station, in particular to a base station or to a user equipment, comprising means which are adapted to perform the steps of the method as described above. In particular, the transmit station may comprise selecting means for selecting the at least one partner from the number of available / possible partners, determining means for determining the priority difference, etc.

The transmit station as described above may be adapted to perform the centralized or the decentralized approach for the coordinated transmission. In the first case, typically, the transmit station is devised as a base station or other suitable device which transmits data in the downlink to a plurality of receiving stations (typically user equipments). A transmit station which may be used for performing the decentralized approach is a (possibly mobile) user node, e.g. in the form of a user equipment, which transmits requests for coordinated transmission for identifying other nodes which may serve as relay stations for uplink transmissions.

A further aspect relates to a partner station ("relay station"), being adapted to receive a packet from at least one transmit station together with a request for coordinated transmission, the partner station being further adapted to determine a priority of the packet and to calculate a response time for sending a response to the transmit station based on a priority difference between the received packet and the packet which is to be transmitted by the partner station, the response time decreasing with increasing priority difference. The relay node / partner station as described above is adapted to perform the decentralized approach and corresponds to what is described as a "possible partner" in the method outlined above. It will be understood that one and the same entity may act as a relay station in some scheduling time intervals and may act as a transmit station or even user equipment in other scheduling time intervals.

In one embodiment, the partner station is further adapted not to transmit a response in case that at least one further partner station transmits its response before the response time of the partner station has been attained. As indicated above, in case that the response time decreases with increasing priority difference, when the partner station overhears a response from a further partner station, there is no need to transmit its own response, as the other partner station is better suited as a pairing partner.

In another embodiment, the partner station is further adapted to compare a requested rate of a receiving station and its own requested rate to a maximum available rate and to ignore the request for coordinated transmission if the maximum available rate is exceeded. In particular, if the maximum available rate is exceeded, there is no need for the partner station to calculate the response time, as no coordinated transmissions with this specific partner station may be performed.

In a further embodiment, the partner station is adapted to transmit the response to the transmit station at the response time, the response including the packet of the partner station which is to be used during the coordinated transmission. As explained above, in this way, the transmit station receives the packet of the partner station to be used for the coordinated transmission during the time slot which is scheduled for that purpose.

A final aspect relates to a communications network, comprising: at least one transmit station of the type described above, and at least one partner station of the type described above. In such a communications network, both a centralized approach for coordinated transmissions in the downlink and a decentralized approach for coordinated transmissions in the uplink may be performed. In the centralized approach, the relay stations / possible partners need not be adapted to perform a comparison between the priorities of different packets, as this comparison is performed by the transmit station (typically a base station) which performs the search for possible partners.

In one embodiment, the communications network is adapted to perform coordinated transmissions using at least one of cooperative multipoint and cooperative relaying. It will be understood that once the pairing partners which participate in the cooperative scheme have been found, basically any cooperative transmission scheme may be used for performing the coordinated transmissions.

Further features and advantages are stated in the following description of exemplary embodiments, with reference to the figures of the drawing, which show significant details, and are defined by the claims. The individual features can be implemented individually by themselves, or several of them can be implemented in any desired combination.

Brief Description of the Figures

Exemplary embodiments are shown in the diagrammatic drawing and are explained in the description below. The following are shown:

**Fig. 1** shows a schematic diagram of a communications network with a transmit station, a receiving station, and a plurality of possible partner stations which may serve as relays for coordinated transmissions, and

**Fig. 2** shows a timing diagram of a decentralized scheme for performing coordinated transmissions in the uplink.

Description of the Embodiments

The functions of the various elements shown in the Figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

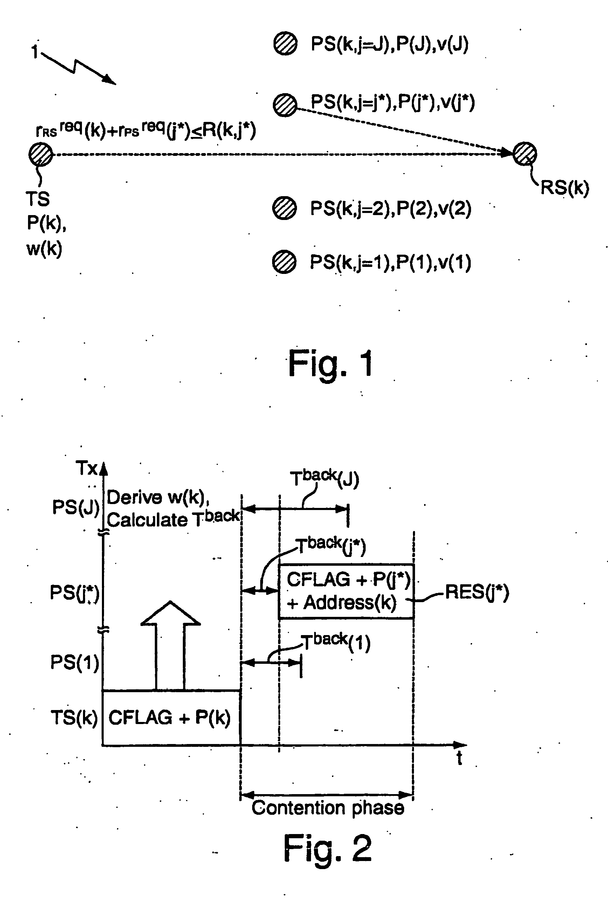

**Fig. 1** shows a schematic representation of a communications network 1 which may be devised e.g. as a wireless relay network, having a transmit station TS, a receiving station RS(k), and a plurality of possible partner stations PS(j=1), ..., PS(j=J) which may be used as relay stations for coordinated transmissions to the receiving station RS(k). The partner / relay stations PS(j=1), ... , PS(j=J) may be devised as network nodes, e.g. as user equipment (e.g. as mobile stations). It will be understood that depending on the scheduling cycle, the receiving station RS(k) may itself serve as a relay station for coordinated transmissions.

**A. Centralized traffic-ware pairing (Downlink)**

First, cooperative transmissions in the communications network 1 of Fig. 1 will be described for the downlink case. In the (centralized) downlink scenario, the transmit station TS may be devised as a base station, and the receiving station RS(k) as well as the possible partners PS(j=1), ..., PS(j=J) may be devised as user equipments, or other base stations. A packet P(k) which has to be sent by the transmit station TS to the receiving station RS(k) has a priority which is designated as w(k). A packet P(j) which has to be sent by the possible partner PS(j) to the receiving station RS(k) has a priority which is designated as v(j).

In the present example, for each of K receiving stations RS(k=1),..., RS(k=K) (only one being shown in Fig. 1 for the sake of simplicity) the transmit station TS selects the single partner PS(k$_J$*) that maximizes |*w(k)-v(j)*| from all *j=1...J* possible partners PS(k,j=1), ..., PS(k,j=J), provided that a requested rate can be supported by the corresponding channel.

One may formalize this approach as follows:

1. For each receiving station RS(k=1),..., RS(k=K) and each potential partner PS(k,j=1), ..., PS(k,j=J), the transmit station TS calculates

$$dW(k,j) = | w(k) - v(j) |$$

leading to a matrix *dW* containing *K x J* priority difference values, each larger than zero.

2. For each receiving station RS(k=1),..., RS(k=K) the transmit station TS selects the partner PS(J*), respectively j*, with the maximal priority difference

$$j^*(k) = \arg\max_{j=1...J} dW(k,j)$$

subject to the rate constraint

$$\forall j : r_{RS}^{\,req}(k) + r_{PS}^{\,req}(j) \le R(k, j).$$

where the matrix R(k, j) contains the $K \times J$ achievable rate values for any possible cooperative set, vector $r_{Rs}^{req}$ contains the requested rates of the receiving station RS(k), and vector $r_{PS}^{req}$ contains the requested rates of the potential partner PS(j).

The above formulae show that in this exemplary cooperative scheme, the transmit station TS chooses the partner PS(j*) that maximizes the difference in frame priority while assuring that the resulting requested rate is not higher than the achievable rate R(k,j) given by the channel.

It should be noted that this formal description already provides an algorithm which requires no more than $K \times J^2$ iterations to solve the pairing problem: Within each of K iterations, the algorithm first calculates $dW$ as above and marks those combinations of RS and PS that violate the above rate constraint (e.g., by negative values within $dW$). This requires J steps. Second, the algorithm requires another J steps to select $j^*$ from $dW$ as above.

Note that this algorithm serves as an illustration. It does not exclude more efficient implementations to solve the above pairing problem. Direct transmission can be integrated as a special case by adding one further column (e.g. column 0) to the matrices $dW$ and $R$. Furthermore, the algorithm can be easily extended to allocate either a fixed number of N partners to each receiving station RS(k) or a number of N(k) partners that varies for each of the K receiving stations RS(k=1),..., RS(k=K).

Applying the above method to solve the pairing problem requires to know:

- the priority vectors $w$ and $v$ with $K$ and $J$ elements, *respectively*,
- the requested rate vectors $r_{RS}^{req}$ and $r_{PS}^{req}$ with $K$ and $J$ elements, respectively, and
- the available rate matrix $R$ with $K \times J$ elements

at the transmit station TS.

This control information can be assumed to be available in a centralized scenario prior to downlink transmission. At scheduler level, a typical transmit station TS (in particular when being devised as a base station) is informed about R, $r_{RS}^{req}$, $r_{PS}^{req}$, and about $w$ and $v$ in many cases. If the priority values in $w$ and $v$ are not readily available, they may be derived from a higher layer protocol header (e.g. RTP, VoIP), or by packet inspection.

Given this control information, a "master" transmit station TS (or Donor transmit station / base station) selects the partner out of a known set of relays before the downlink transmission starts. Then, standard signaling procedures are employed to convey the allocation to the respective relays PS(j=1), ..., PS(j=J) and user nodes.

Although such centralized allocation is efficient for the downlink, it is not as efficient when implemented in the uplink, as one has to pass the control information to a central node. To reduce signaling costs, in the uplink, it is proposed to use a distributed partner allocation scheme as outlined below:

**B. Opportunistic traffic-aware pairing (Uplink)**

In the uplink, to reduce signaling overhead and delay, an efficient protocol cycle can be constructed as illustrated in **Fig. 2**. User k which acts as a transmit station TS(k) starts this uplink cooperation cycle by sending its data packet P(k) with a Cooperation Flag (CFLAG) set. From this packet P(k), all potential partners PS(1), ..., PS(J) derive the priority w(k) (e.g., from transport layer protocol header or by packet inspection).

Any potential partner PS(1),..., PS(J) that overhears the data packet P(k) with the cooperation flag (CFLAG) tests for the rate constraint:

$$r_{RS}^{\,req}(k) + r_{PS}^{\,req}(j) \le R(k, j),$$

where these quantities are defined as above. Here, the requested rate values $r_{RS}^{req}(k)$ and $r_{PS}^{req}(j)$ can be extracted from the received packets and the achievable rate values in $R$ can be estimated from previous transmissions.

If the rate test holds, i.e. if the sum of the requested rates $r_{RS}^{req}(k)$ and $r_{PS}^{req}(j)$ does not exceed the maximum available rate R(k,j), any potential partner PS(j) computes its specific backoff time (also referred to as response time):

$$T^{back}(j) = \frac{\alpha}{|w(k) - v(j)| + 1},$$

where priority values *w* and *v* can be extracted from the received packets and $\alpha$ refers to a constant scaling factor to adjust the backoff time $T^{back}(j)$ to the slot size of the backoff phase.

After waiting for the backoff time $T^{back}(j)$, any potential partner may answer the "call" of the transmit station TS (k). However, any potential partner PS(1), ..., PS(J) remains silent as soon as it overhears an answer of another potential partner, i.e. PS(j*) in the example shown in Fig. 2. As can be seen from Fig. 2, the partner PS(j*) that maximizes the priority difference to TS(k) answers the "call" of TS(k) first and wins the backoff (contention) phase. As illustrated, PS (1) has longer backoff time $T^{back}$ (1) than PS(j*) and, hence, does not answer. Also all other potential partner nodes PS (j # j*) remain silent as soon as they "hear" the response RES(j*) of the relay node PS(j*). Thus, only the partner station PS(j*) having the smallest backoff time T(j*) directly answers with its data packet P(j*) including k's address and a CFLAG set.

The procedure described above achieves the same objective as the downlink scheme without an extensive exchange of control overhead among relay nodes / users PS(1), ..., PS(J) and a transmit station TS(k). The example given above can be easily generalized to N>1 partners by allowing N nodes / users to answer *k*'s "call".

Note that such a pairing protocol works similar for relaying using orthogonal channel resources and for non-orthogonal relaying (e.g., COMP). With orthogonal relaying, the above distributed pairing cycle is performed on the air. Here, the contention phase (cf. Fig. 2) is followed by a cooperative phase where PS(j*) and TS(k) provide transmit diversity by repeating each other's information. With COMP, data exchange and pairing can be performed via the backhaul among the infrastructure nodes. After determining PS(j*), the infrastructure nodes PS(j*) and TS(k) cooperate on the air according to the respective distributed multi-antenna scheme (e.g., COMP, or orthogonal Soft-Decode-And-Forward relaying).

**Example: MPEG-4 video transmission**

The following example illustrates the centralized (downlink) and opportunistic (uplink) pairing schemes for MPEG-4 video. We assume the ITU standard 12-GOP (Group Of Picture) *IPPPPPPPPPPP* where an *I* refers to a full picture *I frame* and *P* to a *P frame* that contains the motion vectors between consecutive I frames.

Since each P frame refines the motion vector of an earlier I or P frame, we can define the priority mapping to *w* as in Table 1. Here, the number behind a P frame defines its position after the previous I frame and lower priority levels reflect higher importance.

Table 1. Priority mapping for the MPEG-4 12-GOP

| Video frame type | Priority level *w* |
| --- | --- |
| I | 1 |
| P1 | 2 |
| P2 | 3 |
| P3 | 4 |
| P4 | 5 |
| P5 | 6 |
| P6 | 7 |
| P7 | 8 |
| P8 | 9 |
| P9 | 10 |
| P10 | 11 |
| P11 | 12 |

Given this priority mapping, we now assume the following scenario to provide a minimal example:

- N=1 partner allowed
- Uplink and Downlink:

  ○ K=1: Packet P(k) for one node *k* at the head of the transmission queue
  ○ P(k) contains one I frame

- Downlink: J=2 potential partners available in the propagation domain of TS and *k* with queue content:

  ○ j=1: One *I* frame packet at the head of the transmission queue
  ○ j=2: One P8 frame packet at the head of the transmission queue

- Uplink: J=2 potential partners available in the propagation domain of the BS and k with queue content:

  ○ j=1: One P3 frame packet at the head of the transmission queue
  ○ j=2: One *I* frame packet at the head of the transmission queue

For this simple illustration, we assume that the rate *R* remains stable per time slot and that the rate constraint always holds.

**A. Centralized traffic-ware pairing (Downlink)**

- Input to TS / BS allocation algorithm: N=1; K=1; J=2; w=1; v=(1, 9)
- For each k=1... K:

  ○ For all j=1...J: dW=(0, 8)
  ○ $j^*=\arg\max_{j=1...J}(w(k)-v(j))=2$

- Algorithm returns: j*=2 => Station 2 is the partner for PS 1
- Consequence: Transmitted in this cooperative phase

  ○ I frame packet by user k
  ○ *P8* frame packet by user 2

**B. Opportunistic traffic-ware pairing (Uplink)**

- Potential Partner j=1: w(k)=1, v(j)=4, $T^{back}(1) = \alpha/4$
- Potential Partner j=2: w(k)=1, v(j)=1, $T^{back}(2) = \alpha$
- Potential Partner j=1 answers first, i.e., j*=1, and is paired with *k*, Potential Partner 2 may receive the answer of j* and remain silent
- Consequence: Transmitted in cooperative phase:

  ○ *I* frame packet by user k
  ○ *P3* frame packet by user 1.

In the way described above, a solution is presented to allocate relays for media transmission. The proposed solution can be easily implemented e.g. at scheduling level (downlink) and as a Layer 2 protocol (uplink). The solution is based on existing techniques (contention phases, signaling channels) and efficiently uses them in a new pairing strategy. It will be understood that the attribution of priorities to packets is not limited to the above example of MPEG-4 video packets, and that other types of packets may be attributed with QoS priorities as well.

It should be appreciated by those skilled in the art that any block diagrams herein represent conceptual views of illustrative-circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Also, the description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

**References**

[1] J. Shi, G. Yu, Z. Zhang, Y. Chen, and P. Qiu, "Partial Channel State Information Based Cooperative Relaying and Partner Selection," 2007 IEEE WCNC, 2007, pp. 975-979.
[2] E. Erkip and A. Stefanov, "Cooperative regions for coded cooperative systems," IEEE Global Telecommunications Conference, 2004. IEEE GLOBECOM., 2004, pp. 21-25.
[3] N.F. Mehr and H. Khoshbin, "Performance analysis of relay selection methods for IEEE802.16j," International Conference on Electrical and Computer Engineering, vol. 00, 2008, pp. 484-487.
[4] Y. Jing and H. Jafarkhani, "Single and multiple relay selection schemes and their achievable diversity orders," IEEE Transactions on Wireless Communications, vol. 8, 2009, pp. 1414-1423.
[5] K.R. Liu, A.K. Sadek, W. Su, and A. Kwasinski, Cooperative Communications and Networking, Cambridge University Press, 2009.

**Claims**

1. Method for selecting at least one partner station (PS(j*)) from a number (J) of possible partner stations (PS(j=1), ..., PS(j=J)) of a transmit station (TS, TS(k)) for coordinated transmission of at least two packets (P(k), P(j*)), the method comprising:

   determining a priority (w(k)) of a packet (P(k)) to be transmitted by the transmit station (TS(k)) and priorities (v(1),..., v(J)) of packets (P(1), ..., P(J)) to be transmitted by the possible partner stations (PS(j=1), ..., PS(j=J)), and selecting the at least one partner station (PS(j=j*)) based on a comparison of the priorities (w(k); v(1),... , v(J)) of the packets (P(k); P(1), ..., P(J)),
   **characterized in that**
   each possible partner station (PS(j=1), ..., PS(j=J)) receives the packet (P(k)) from the transmit station (TS(k)) together with a request (CFLAG) for coordinated transmission, determines the priority (w(k)) of the packet (P(k)), and calculates a response time ($T^{back}(1),..., T^{back}(J)$) for sending a response (P(j*)) to the transmit station (TS(k)) based on a priority difference ($|w(k) - v(j)|$) between the received packet (P(k)) and the packet (P(j)) which is to be transmitted by the possible partner station (PS(j=1), ..., PS(j=J)), wherein the response time ($T^{back}(1),..., T^{back}(J)$) decreases with increasing priority difference ($|w(k) - v(j)|$).

2. Method according to claim 1, wherein a partner station (PS(j*)) is selected whose packet (P(j*)) has a maximum priority difference ($|w(k) - v(j^*)|$) to the packet (P(k)) to be transmitted by the transmit station (TS, TS(k)).

3. Method according to claim 1 or 2, wherein the selection of the partner station (PS(j*)) is further based on a comparison of a requested rate ($r_{RS}^{req}(k)$) of a receiving station (RS(k)) and of at least one requested rate ($r_{PS}^{req}(j)$) of the at least one possible partner station (PS(j=1),..., PS(j=J)) to a maximum available rate (R(k,j)).

4. Method according to any one of the preceding claims, wherein at least one possible partner station (PS(j ≠ j*) does not transmit a response to the transmit station (TS(k)) when receiving a response (RES(j*)) from at least one other possible partner station (PS(j*)).

5. Method according to any one of the preceding claims, wherein the partner station (PS(j*)) transmits its response (RES(j*)) to the transmit station (TS(k)) at the response time ($T^{back}(j^*)$), the response (RES(j*)) including the packet (P(j*)) of the partner station (PS(j*)) to be used for the coordinated transmission.

6. Method according to any one of claims 3 to 5, wherein any possible partner station (PS(j=1), ..., PS(j=J)) ignores the request (CFLAG) for coordinated transmission if the request exceeds the maximum available rate (R(k,j)).

7. Partner station (PS(j=1), ..., PS(j=J)), adapted to receive a packet (P(k)) from at least one transmit station (TS(k)) together with a request (CFLAG) for coordinated transmission, the partner station (PS(j=1), ..., PS(j=J)) being further adapted to determine a priority (w(k)) of the packet (P(k)) and to calculate a response time ($T^{back}(1),..., T^{back}(J)$) for sending a response (RES(J*)) to the transmit station (TS(k)) based on a priority difference ($|w(k) - v(j)|$) between the received packet (P(k)) and the packet (P(j)) which is to be transmitted by the partner station (PS(j=1), ..., PS(j=J)), wherein the response time ($T^{back}(1),..., T^{back}(J)$) decreases with increasing priority difference ($|w(k) - v(j)|$).

8. Partner station according to claim 7, being further adapted not to transmit a response in case that at least one further partner station (PS(j*)) transmits its response (RES(j*)) before the response time ($T^{back}(j \# j^*)$) of the partner station (PS(j ≠ j*)) has been attained.

9. Partner station according to claim 7 or 8, being further adapted to compare a requested rate ($r_{RS}^{req}(k)$) of a receiving station (RS(k)) and its own requested rate ($r_{PS}^{req}(j)$) to a maximum available rate (R(k,j)) and to ignore the request (CFLAG) for coordinated transmission if the maximum available rate (R(k,j)) is exceeded.

10. Partner station according to any one of claims 7 to 9, being adapted to transmit the response (RES(j*)) to the transmit station (TS(k)) at the response time ($T^{back}(j^*)$), the response (RES(j*)) including the packet (P(j*)) of the partner station (PS(j*)) which is to be used during the coordinated transmission.

11. Communication network (1), comprising:

   at least one transmit station (TS(k)), and
   at least one partner station (PS(j=1), ..., PS(j=J)) according to any one of claims 7 to 10.

12. Communication network according to claim 11, being adapted to perform coordinated transmissions using at least one of cooperative multipoint and cooperative relaying.


**Patentansprüche**

1. Verfahren zum Auswählen mindestens einer Partnerstation (PS(j*)) aus einer Anzahl (J) von möglichen Partnerstationen (PS(j=1), ..., PS(j=J)) einer Sendestation (TS, TS(k)) für die koordinierte Übertragung mindestens zweier Pakete (P(k), P(j*)), wobei das Verfahren umfasst:

   Ermitteln einer Priorität (w(k)) eines von der Sendestation (TS(k)) zu übertragenden Pakets (P(k)) und von Prioritäten (v(1), ..., v(J)) von von den möglichen Partnerstationen (PS(j=1), ..., PS(j=J)) zu übertragenden Paketen (P(1), ..., P(J)), und
   Auswählen der mindestens einen Partnerstation (PS(j=j*)) auf der Basis eines Vergleichs der Prioritäten (w(k); v(1), ..., v(J) der Pakete (P(k); P(1), ..., P(J)),
   **dadurch gekennzeichnet, dass**
   jede mögliche Partnerstation (PS(j=$_1$), ..., PS(j=J)) ein Paket (P(k)) mit einer Anforderung (CFLAG) für die koordinierte Übertragung von der Sendestation (TS(k)) empfängt, die Priorität (w(k)) des Pakets (P(k)) ermittelt und eine Reaktionszeit ($T^{back}(1), ... T^{back}(J)$) für das Senden einer Antwort (P(j*)) an die Sendestation (TS(k)) basierend auf einem Prioritätsunterschied ($|w(k) - v(j)|$) zwischen dem empfangenen Paket (P(k) und dem Paket (P(j)), welches von der möglichen Partnerstation (PS(j=1), ..., PS(j=J)) übertragen werden soll, berechnet, wobei sich die Reaktionszeit ($T^{back}(1), .. T^{back}(J)$) mit zunehmendem Prioritätsunterschied ($|w(k) - v(j)|$) verringert.

2. Verfahren nach Anspruch 1, wobei eine Partnerstation (PS(j*)), deren Paket (P(j*)) eine maximale Prioritätsunterschied ($|w(k) - v(j^*)|$)mit dem von der Sendestation (TS, TS(k)) zu übertragenden Paket (P(k)) aufweist, ausgewählt wird.

3. Verfahren nach Anspruch 1 oder 2, wobei das Auswählen der Partnerstation (PS(j*)) weiterhin auf einem Vergleich einer angeforderten Rate ($r_{RS}^{req}(k)$) einer empfangenden Station (RS(k)) mit mindestens einer angeforderten Rate

($r_{PS}{}^{req}(j)$) der mindestens einen möglichen Partnerstation (PS(j=1), .... PS(j=J)) mit einer maximalen verfügbaren Rate (R(k,j)) basiert.

4. Verfahren nach einem beliebigen der vorstehenden Ansprüche, wobei mindestens eine mögliche Partnerstation (PS(j ≠ j*)) keine Antwort an die Sendestation (TS(k)) überträgt, wenn sie eine Antwort (RES(j*)) von mindestens einer anderen möglichen Partnerstation (PS(j*)) empfängt.

5. Verfahren nach einem beliebigen der vorstehenden Ansprüche, wobei die Partnerstation (PS(j*)) ihre Antwort (RES (j*)) an die Sendestation (TS(k)) gemäß der Reaktionszeit ($T^{back}$(j*)) überträgt, wobei die Antwort (RES(j*)) das für die koordinierte Übertragung zu verwendende Paket (P(j*)) der Partnerstation (PS(j*)) enthält.

6. Verfahren nach einem beliebigen der Ansprüche 3 bis 5, wobei jede mögliche Partnarstation (PS(j=1), ..., PS(j=J)) die Anforderung (CFLAG) für eine koordinierte Übertragung ignoriert, wenn die Anforderung die maximale verfügbare Rate (R(k,j)) überschreitet.

7. Partnerstation (PS(j=1), ..., PS(j=J)), ausgelegt für den Empfang eines Paketes (P(k)) von mindestens einer Sendestation (TS(k)) zusammen mit einer Anforderung (CFLAG) für die koordinierte Übertragung, wobei die Partnerstation (PS(j=1), ..., PS(j=J)) weiterhin dazu ausgelegt ist, eine Priorität (w(k)) des Paketes (P(k)) zu ermitteln und eine Reaktionszeit ($T^{back}$(1),..., $T^{back}$(J)) für das Senden einer Antwort (RES(j*)) an die Sendestation (TS(k)) basierend auf einem Prioritätsuntarschied (|w(k) - v(j)|) zwischen dem empfangenen Paket (P(k)) und dem Paket (P(j)), welches von der Partnerstation (PS(j=1), ..., PS(j=J)) übertragen werden soll, zu berechnen, wobei sich die Reaktionszeit ($T^{back}$(1), ..., $T^{back}$(J)) mit zunehmendem Prioritätsunterschied (|w(k) - v(j)|) verringert.

8. Partnerstation nach Anspruch 7, weiterhin dazu ausgelegt, keine Antwort zu übertragen, wenn die mindestens eine weitere Partnerstation (PS(j*)) ihre Antwort (RES(j*)) überträgt, bevor die Reaktionszeit ($T^{back}$(1), ..., $T^{back}$(J)) der Partnerstation (PS(j ≠ j*)) erreicht wurde.

9. Partnerstation nach Anspruch 7 oder 8, weiterhin dazu ausgelegt, eine geforderte Rate ($r_{RS}{}^{req}(k)$) einer empfangenden Station (RS(k)) und ihre eigene geforderte Rate ($r_{PS}{}^{req}(j)$) mit einer maximalen verfügbaren Rate (R(k,j) zu vergleichen und die Anforderung (CFLAG) für eine koordinierte Übertragung zu Ignorieren, wenn die maximale verfügbare Rate (R(k,j)) überschritten wird.

10. Partnerstation nach einem beliebigen der Ansprüche 7 bis 9, dazu ausgelegt, eine Antwort (RES(j*)) gemäß der Reaktionszeit ($T^{back}$(j*)) an die Sendestation (TS(k)) zu übertragen, wobei die Antwort (RES(j*)) das Paket (P(j*)) der Partnerstation (PS(j*)), welches während der koordinierten Übertragung verwendet werden soll, enthält.

11. Kommunlkatlonsnetzwerk (1), umfassend:

   Mindestens eine Sendestation (TS(k)), und
   mindestens eine Partnerstation (PS(j=1), ..., PS(j=J)) gemäß einem beliebigen der Ansprüche 7 bis 10.

12. Kommunikationsnetzwerk nach Anspruch 11, ausgelegt für das Durchführen von koordinierten Übertragungen unter Verwendung mindestens entweder der kooperativen Mehrpunktübertragung oder der kooperativen Weiterleitung.

## Revendications

1. Procédé de sélection d'au moins un partenaire (PS(j*)) à partir d'un nombre (J) de stations partenaires possibles (PS(j=1), ..., PS(j=J)) d'une station de transmission (TS, TS(k)) pour une transmission coordonnée d'au moins deux paquets (P(k), P(j*)), le procédé comprenant les étapes suivantes :

   déterminer une priorité (w(k)) d'un paquet (P(k)) devant être transmis par la station de transmission (TS(k)) et des priorités (v(1),..., v(J)) de paquets (P(1), ..., P(J)) devant être transmis par les stations partenaires possibles (PS(j=1), ..., PS(j=J)), et
   sélectionner l'au moins une station partenaire (PS(j=J*)) sur la base d'une comparaison des priorités (w(k); v (1),..., v(J)) des paquets (P(k) ; P(1), ..., P(J)).
   **caractérisé en ce que**
   chaque station partenaire possible (PS(j=1), ..., PS(J=J)), reçoit le paquet (P(k)) à partir de la station de transmission (TS(k)) avec une demande (CFLAG) de transmission coordonnée, détermine la priorité (w(k)) du paquet (P(k)), et calcule un temps de réponse (Tback(1),..., Tback(J)) pour envoyer une réponse (P(j*)) à la station de transmission (TS(k)) sur la base d'une différence de priorité ($|w(k) - v(j)|$) entre le paquet reçu (P(k)) et le paquet (P(j)) qui doit être transmis par la station partenaire possible (PS(j=1), ..., PS(j=J)), dans lequel le temps de réponse ($T^{back}(1),..., Tback(J)$) diminue à mesure que la différence de priorité ($|w(k) - v(j)|$) augmente.

2. Procédé selon la revendication 1, dans lequel on sélectionne un partenaire (PS(j*)) dont le paquet (P(J*)) présente une différence de priorité maximum ($|w(k) - v(j^*)|$) par rapport au paquet (P(k)) devant être transmis par la station de transmission (TS, TS(k)).

3. Procédé selon la revendication 1 ou 2, dans lequel la sélection de la station partenaire (PS(j*)) est en outre basée sur une comparaison entre un débit demandé ($r_{RS}{}^{req}(k)$) d'une station de réception (RS(k)) et d'au moins un débit demandé ($r_{PS}{}^{req}(j)$) de l'au moins une station partenaire possible (PS(j=1),..., PS(j=J)) à un débit disponible maximum (R(k,j)).

4. Procédé selon l'une quelconque des revendications précédentes, dans lequel au moins une station partenaire possible (PS(j ≠ j*) ne transmet pas une réponse à la station de transmission (TS(k)) lorsqu'elle reçoit une réponse (RES(j*)) provenant d'au moins une autre station partenaire possible (PS(j*)).

5. Procédé selon l'une quelconque des revendications précédentes, dans lequel la station partenaire (PS(J*)) transmet sa réponse (RES(j*)) à la station de transmission (TS(k)) au temps de réponse ($T^{back}(j^*)$), la réponse (RES(j*)) comprenant le paquet (P(j*)) de la station partenaire (PS(j*)) à utiliser pour la transmission coordonnée.

6. Procédé selon l'une quelconque des revendications 3 à 5, dans lequel toute station partenaire possible (PS(j=1), ..., PS(j=J)) ignore la demande (CFLAG) de transmission coordonnée si la demande dépasse le débit disponible maximum (R(k,j)).

7. Station partenaire (PS(J=1), ..., PS(j=J)), adaptée pour recevoir un paquet (P(k)) à partir d'au moins une station de transmission (TS(k)) avec une demande (CFLAG) de transmission coordonnée, la station partenaire (PS(j=1), ..., PS(j=J)) étant en outre adaptée pour déterminer une priorité (w(k)) du paquet (P(k)) et pour calculer le temps de réponse ($T^{back}(1),..., T^{back}(J)$) pour envoyer une réponse (RES(j*)) à la station de transmission (TS(k)) sur la base d'une différence de priorité ($|w(k) - v(j)|$) entre le paquet reçu (P(k)) et le paquet (P(j)) qui doit être transmis par la station partenaire (PS(j=1),..., PS(|=J)), dans laquelle le temps de réponse ($T^{back}(1),..., T^{back}(J)$) diminue à mesure que la différence de priorité ($|w(k) - v(j)|$) augmente.

8. Station partenaire selon la revendication 7, étant en outre adaptée pour ne pas transmettre une réponse au cas où au moins une autre station partenaire (PS(j*)) transmet sa réponse (RES(j*)) avant que le temps de réponse ($T^{back}(j \neq j^*)$) de la station partenaire (PS(j ≠ j*)) a été atteint.

9. Station partenaire selon la revendication 7 ou 8, étant en outre adaptée pour comparer un débit demandé ($r_{RS}{}^{req}(k)$) d'une station de réception (RS(k)) et de son propre débit demandé ($r_{PS}{}^{req}(j)$) à un débit disponible maximum (R(k,j)) et pour ignorer la demande (CFLAG) de transmission coordonnée si le débit disponible maximum (R(k,j)) est dépassé.

10. Station partenaire selon l'une quelconque des revendication 7 à 9, étant adaptée pour transmettre la réponse (RES(j*)) à la station de transmission (TS(k)) au temps de réponse ($T^{back}(j^*)$), la réponse (PES(j*)) comprenant le paquet (P(j*)) de la station partenaire (PS(j*)) qui doit être utilisé durant la transmission coordonnée.

11. Réseau de communication (1), comprenant :

    au moins une station de transmission (TS(k)), et
    au moins une station partenaire (PS(j=1), ..., PS(j=J)) selon l'une quelconque des revendications 7 à 10.

12. Réseau de communication selon la revendication 11, étant adapté pour réaliser des transmissions coordonnées en utilisant au moins la transmission multipoint coopérative ou le relais coopératif.

1

$r_{RS}^{req}(k) + r_{PS}^{req}(j^*) \leq R(k,j^*)$

⊘ PS(k,j=J),P(J),v(J)

⊘ PS(k,j=j*),P(j*),v(j*)

⊘

RS(k)

TS
P(k),
w(k)

⊘ PS(k,j=2),P(2),v(2)

⊘ PS(k,j=1),P(1),v(1)

# Fig. 1

Tx

PS(J) | Derive w(k),
Calculate T^back

$T^{back}(J)$

$T^{back}(j^*)$

PS(j*)

CFLAG + P(j*)
+ Address(k)

RES(j*)

$T^{back}(1)$

PS(1)

TS(k) | CFLAG + P(k)

t

Contention phase

# Fig. 2

**EP 2 480 026 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7542478 B1

- US 20080002608 A1

**Non-patent literature cited in the description**

- **SHAN CHU et al.** Adaptive exploitation of cooperative relay for high performance communications in MIMO ad hoc networks. *Mobile Adhoc and Sensor Systems (MASS), 2010 IEEE 7th International Conference,* 08 November 2010, 21-30
- **J. SHI ; G. YU ; Z. ZHANG ; Y. CHEN ; P. QIU.** Partial Channel State Information Based Cooperative Relaying and Partner Selection. *2007 IEEE WCNC,* 2007, 975-979
- **E. ERKIP ; A. STEFANOV.** Cooperative regions for coded cooperative systems. *IEEE Global Telecommunications Conference, 2004,* 2004, 21-25
- **N.F. MEHR ; H. KHOSHBIN.** Performance analysis of relay selection methods for IEEE802.16j. *International Conference on Electrical and Computer Engineering,* 2008, vol. 00, 484-487
- **Y. JING ; H. JAFARKHANI.** Single and multiple relay selection schemes and their achievable diversity orders. *IEEE Transactions on Wireless Communications,* 2009, vol. 8, 1414-1423
- **K.R. LIU ; A.K. SADEK ; W. SU ; A. KWASINSKI.** Cooperative Communications and Networking. Cambridge University Press, 2009